# EUROPÄISCHE PATENTANMELDUNG

(11) **EP 2 385 023 A2**
(43) Veröffentlichungstag der Anmeldung: **09.11.2011**
(21) Anmeldenummer: 11003639.9
(22) Anmeldetag: 04.05.2011
(51) Int. Cl.: C03B 1/00, B01F 7/00

(54) **Intensivmischer für Glasgemenge**

(30) Priorität: 04.05.2010 RU 2010117809
(71) Anmelder: OAO "Salavatsteklo", 453253 Salavat (RU)
(72) Erfinder: Tokarev, Valentin D., 453261 g. Salavat (RU); Agureev, Sergej A., 453200 g. Ishimbaj (RU); Sultanov, Radik I., 450078 g. Ufa (RU); Litvin, Vladimir I., 453250 g. Salavat (RU); Fomin, Petr A., 453261 g. Salavat (RU)
(74) Vertreter: Jeck, Anton

(57) **Zusammenfassung**

Die Erfindung betrifft einen Intensivmischer für Glasgemenge. Die Erfindung ist in der Glasindustrie einsetzbar und kann in den Einrichtungen zur Aufbereitung eines quatitativen Gemenges vor der Beschickung eines Glasschmelzofens eingesetzt werden. Das technische Ergebnis ist eine Erhöhung der Glasqualität und eine Senkung des Energieverbrauchs durch die Beschleunigung des Glasschmelzprozesses. Der kontinuierliche Intensivmischer umfasst eine horizontale zylindrische Mischkammer mit einem Einlassstutzen zur Gemenge-Glasscherben-Beschickung sowie zwei Düsen zur Wasser- und Dampfzufuhr. Die Kammer hat einen Beschickungs-, einen Speicher- und einen Entleerungsbereich. In der Kammer ist eine zentrale Rotorwelle angebracht. Der Mischer hat eine Auslassöffnung zur Entleerung des Gemenge-Glasscherben-Gemisches mit unter der Öffnung angebrachten Magnetabscheidern. Dabei sind Schaber an der Rotorwelle zur Reinigung der Kammerwände angebaut. In den Beschickungs- und Entleerungsbereichen sind Schaufelschneiden unter einem Winkel von 90° zur Rotorwelle angebaut und gleichmäßig umlaufend verteilt. Allein die zweite Schneide ist unter einem Winkel von 60° bezüglich der ersten Schneide (Intensivmischerbereich) angebracht. Die Summenschneidfläche überschreitet die Länge des Bereichs, in dem sie angebracht sind, um 15 - 30 %.

## Beschreibung

Die Erfindung betrifft einen Intensivmischer für Glasgemenge nach dem Oberbegriff des Anspruchs 1.

Die Erfindung ist in der Glasindustrie einsetzbar und kann für Einrichtungen zur Aufbereitung eines qualitativen Gemenges vor der Beschickung eines Glasschmelzofens verwendet werden.

Aus dem RU 2307097 (Veröffentlichung 2007) ist ein Hochgeschwindigkeitsmischer zur Aufbereitung des Rohstoffmaterials für Schaumsilikat bekannt. Dieser stellt einen horizontalen zylindrischen Apparat mit einer in einem Gehäuse zentral drehenden Schaufelwelle dar. Die Schaufeln dienen gleichzeitig als Schneiden, die die Anhaftung des Materials im Gehäuseinneren verhindern.

Das Gehäuse bewegt sich bezüglich der Welle. Dies führt zu einem regelmäßigen Abschneiden des an die innere Gehäusefläche angehafteten feuchten Gemengematerials mittels der Schaufeln.

Der nach dem technischen Wesen und dem erreichten Ergebnis der Erfindung am nächsten stehende Mischer ist ein kontinuierlicher Mischer für ein Glasgemenge. Dieser Mischer umfasst eine horizontale zylindrische Mischkammer mit einem Einlassstutzen zur Gemenge- und Glasscherbenbeschickung, eine Auslassöffnung für das Gemenge und die Glasscherben, ein horizontales Rohr mit mehreren kegelförmigen Düsen zum Wasserzuführen und Schöpfer und bewegliche Schaufeln. Die Schaufeln sind im Mischkammerinneren angebracht. An den Stirnwänden der Mischkammer sind dabei die Schaber angebracht (GB 1001005, Veröffentlichung 1965).

Die Nachteile der bekannten Mischer sind eine unzureichende Homogenität und eine nicht optimale Feuchtigkeit des Gemenges wegen einer unvermeidlichen Verklumpung und einer Anhaftung des Gemenges am Gehäuseinneren. Dies führt zu einer Verlangsamung des Glasschmelzprozesses und zu einer Erhöhung des Brennstoffverbrauchs im Betrieb des Glasschmelzofens.

Es ist Aufgabe der Erfindung, die Glasqualität durch eine verbesserte Homogenität des Gemenge-Glasscherben-Gemisches mit der Sicherstellung einer optimalen Feuchtigkeit und Temperatur zu erhöhen und dabei den Energieverbrauch zu reduzieren. Dies beschleunigt das Glasschmelzen und stellt eine Glasmasse mit einer hohen Homogenität sicher. Der neue Mischer ermöglicht auch, das Stauben und den Austrag flüchtiger Gemengekomponenten in die Regeneratoren zu reduzieren. Damit wird auch der Verschleiß der Feuerstoffe im oberen Ofenbau und in den Aufsätzen der Regeneratoren reduziert sowie die Dauer der Ofenreise erhöht.

Die gestellte Aufgabe wird durch die Merkmale des Anspruchs 1 gelöst.

Das genannte technische Ergebnis wird durch die baulichen Besonderheiten des neuen kontinuierlichen Intensivmischers erreicht. Der Mischer stellt eine horizontale zylindrische Mischkammer mit einem Zentralrotor und einem Elektroantrieb dar. Die Mischkammer weist einen Einlassstutzen zur Gemenge- und Glasscherbenbeschickung mit unter dem Einlassstutzen angebrachten Magnetabscheidern auf. Die Kammer ist der Länge nach in einen Beschickungs-, Speicher- und Entleerungsbereich unterteilt. Der Beschickungsbereich ist mit einer Wasserzuführdüse und einer Dampfzufuhrdüse zur Gemischbefeuchtung versehen. In der Kammerachse ist eine zentrale Rotorwelle angebracht. Auf der Rotorwelle sind Schneiden im Beschickungs- und Entleerungsbereich angebracht. Die Schneiden sind unter einem Winkel von 90° zur Welle umlaufend angebracht. Nur die zweite Schneide ist unter einem Winkel von 60° bezüglich der ersten Schneide angebracht. Die Summenfläche der Schneiden überschreitet die Länge des Bereichs, in dem sie angebracht sind, um 15 - 30%. An den Stirnwänden der Kammer sind Schaber aufgestellt, um ein Anhaften des Gemisches zu verhindern.

Die Erfindung wird anhand eines in den Zeichnungen dargestellten Ausführungsbeispiels näher erläutert. Es zeigen:
Fig. 1 das technologische Schema der Aufbereitung des Gemenges und der Glasscherben,
Fig. 2 den Intensivmischer für das Glasgemenge im vertikalen Schnitt und
Fig. 3 die Schnitte A-A und B-B entlang den Linien A-A und B-B der Fig. 2.

Während des Transports des Einsatzes über das Förderband 1 aus einer Dosier-und Mischhalle bis zum Verbrauchsbunker 8 eines Glasschmelzofens schichtet sich das Gemenge ab, kühlt sich ab und verliert wesentlich an Feuchtigkeit.

Die trockenen Glasscherben mit einer niedrigeren Temperatur als die Temperatur des Gemenges werden ohne Vermischung von einem Rüttelbeschicker 2 zugeführt. Dies wirkt sich negativ auf die Qualität des Gemisches aus dem Gemenge und den Glasscherben aus, verlangsamt den Schmelzprozess und erschwert die Ausgleichung der Glasmasse.

Darüber hinaus entstehen ein hohes Stauben in dem unzureichend befeuchteten Gemenge und eine Störung seiner chemischen Zusammensetzung während der Beförderung zum Reversierband 6 und in die Verbrauchsbunker 8.

Um die oben genannten Nachteile zu beseitigen und den Schmelzprozess zu stabilisieren, ist ein Mischer zwischen dem Förderband 1 für das Gemenge und dem Reversierband 6 für die Beschickung des Gemenges und der Glasscherben in die Beschickungsbunker 8 des Glasschmelzofens angebracht. Der Mischer ist ein kontinuierlicher Trommelmischer mit Schaufelschneiden und mit vertikaler Beschickung und Entleerung. Dies stellt eine zusätzliche Befeuchtung und Ausgleichung des Gemenges bis zum technologisch benötigten Niveau sicher.

Diese Lösung ermöglicht, das Gemenge und die Glasscherben kontinuierlich zu mischen, und stellt eine hohe Qualität des Gemisches aus dem Gemenge und den Glasscherben vor der Beschickung des Glasschmelzofens sicher.

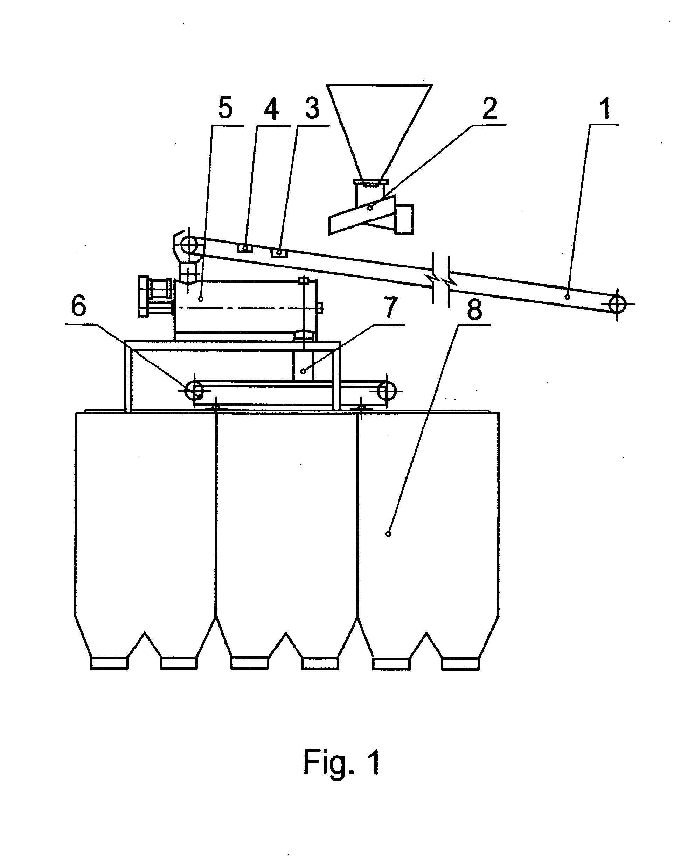

Die Aufbereitung des Gemenges und der Glasscherben (Fig.1) ist wie folgt verwirklicht.

Der Einsatz aus der Dosier- und Mischhalle ist auf dem Förderband 1 transportiert. Auf das Gemenge sind Glasscherben 2 abgewogen und dem Schüttelspeiser zugeführt.

Der erste am Förderband angebrachte Geber 3 schickt ein Signal über das vorhandene Gemenge und schaltet einen Mischer 5 ein. Wenn das Gemenge zum zweiten Geber 4 gelangt, wird ein Signal zur Öffnung eines Heißwasserventils 19 oder eines Dampfventils 20 im Mischer 5 erzeugt. Das Wasser (der Dampf) wird über einen Druckregler zugeführt und in den ersten (Beschickungs-)Bereich des Mischers 5 durch einen Injektor eingespritzt. Die Wasser- und Dampfmenge ist durch ein vorgegebenes Programm geregelt. Dazu sind ein tensometrischer Geber 4 zum Wägen des Gemenges und als Geber 4 ein Kontroller der Wasserzufuhrpumpe am Förderband 1 angebracht.

Der Einsatz ist dem Mischer 5 über eine Schurre vom Förderband 1 zugeführt. Danach wird er, vermischt und befeuchtet, der Auslassöffnung zugeführt, auf das Reversierband 6 zugeführt und danach in die Verbrauchsbunker 8 der Beschickungstasche des Glasschmelzofens entleert. Um Eisen abzuscheiden, sind unter der Auslaufschurre des Mischers 5 Magnetabscheider 7 angebracht.

Die Wartung des Mischers 5 wird dreimal in der Woche durchgeführt. Während der Wartung werden die Einheiten technisch geprüft und der Verschleiß der Schaber 11 und der Schaufelschneiden 10 kontrolliert. Gegebenenfalls werden die Schaber 11 und die Schaufelschneiden 10 ausgewechselt sowie der Mischer 5 vom zusammengepressten Gemenge gereinigt. Ein Mischerrahmen wird auf Gleisen aufgestellt. Dies ermöglicht, den Mischer 5 während der Reparaturarbeiten zur Seite wegzurollen und eine Pendelschurre aufzustellen.

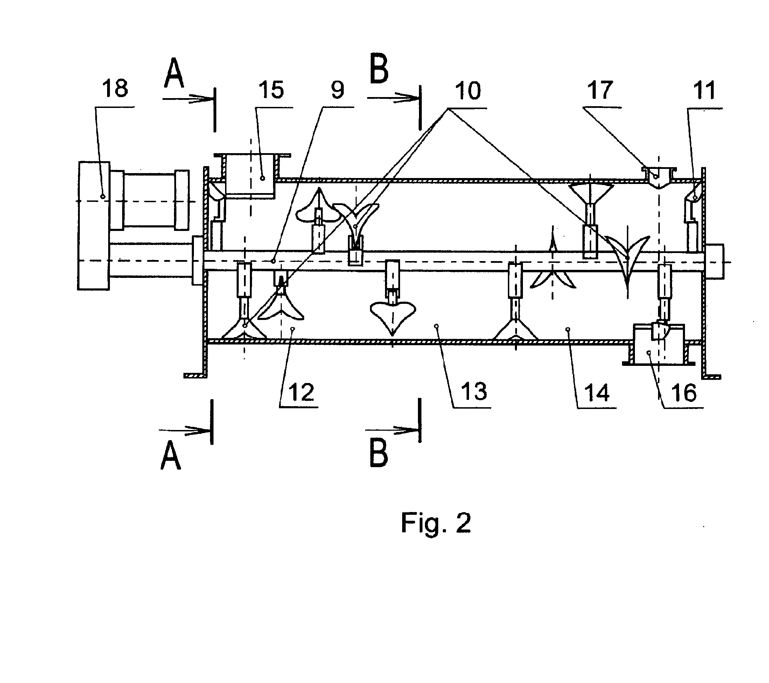

In Fig. 2 ist ein vertikaler Schnitt des Mischers 5 dargestellt.

In dem Mischergehäuse sind horizontal die Rotorwelle 9 mit darauf aufgesetzten Schaufeln als Schaufelschneiden 10 im Vorder- und Hinterteil der Welle und Schaber 11 zum Reinigen der Stirnflächen des Gehäuses angeordnet. Die Rotorwelle 9 dreht sich, und das Gemenge, indem es vermischt und befeuchtet wird, bewegt sich zur Auslassöffnung hin und weiter auf das Reversierband 6. Bezüglich der Bauart und der Anordnung der Schaufelschneiden 10 ist der Mischer 5 in drei Bereiche unterteilt: in einen Beschickungsbereich 12, in dem ein Intensivmischen erfolgt, in einen Speicherbereich 13, in dem ein normales Mischen erfolgt, und in einen Entleerungsbereich 14.

In der Bauart unterscheiden sich die Schaber 11 von den Schaufelschneiden 10, da die Schaber 11 das an den Stirnwänden anhaftende Gemenge abschaben und es den Schaufelschneiden 10 zuführen sollen.

Die Abmessungen der Mischkammer und die Schaberanzahl sind aufgrund der vorgegebenen Mischerleistung festgelegt.

Der Mischer 5 umfasst auch eine Einlassöffnung 15 zur Beschickung des Gemenges und der Glasscherben, eine Auslassöffnung 16 und eine Öffnung 17 für ein Aspirationssystem. Der Mischer ist mit einem Antrieb 18 ausgestattet.

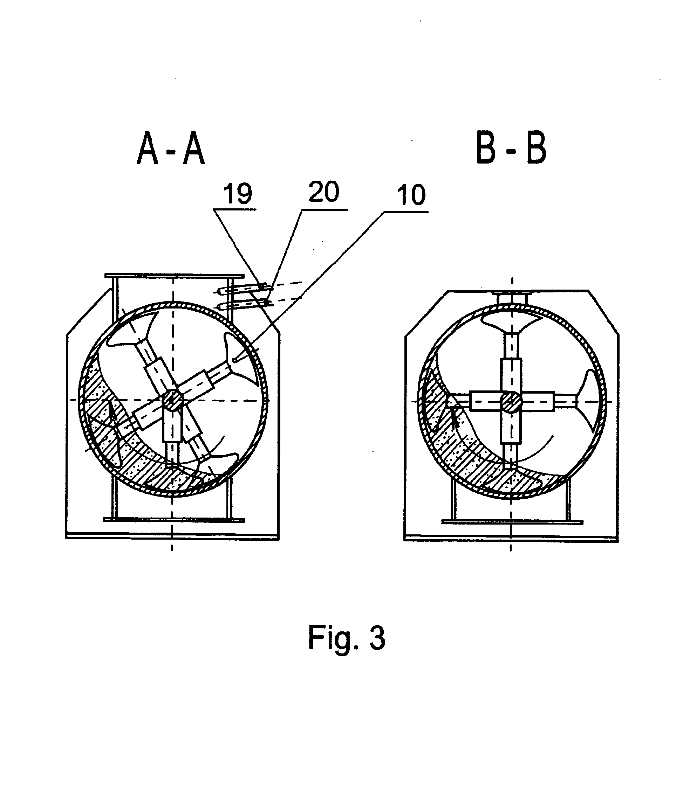

In Fig. 3 sind die Schnitte A-A und B-B des Mischers 5 dargestellt.

Auf der Rotorwelle 9 sind die Schaufelschneiden 10 in den Beschickungs- und Entleerungsbereichen 12 und 14 angebracht. Die Schaufelschneiden 10 sind unter einem Winkel von 90° und umlaufend gleichmäßig verteilt. Allein die zweite Schaufelschneide 10 ist unter einem Winkel von 60° bezüglich der ersten Schaufelschneide 10 angebracht. Der Mischer 5 ist mit einer Düse 19 und 20 für eine Wasser- und Dampfzufuhr ausgestattet.

Der Innendurchmesser und die Länge des Mischers 5 sind im Verhältnis von ca. 1 zu 3 ausgeführt und berücksichtigen eine benötigte Leistung von ca. 8 T/Stunde pro 1 Meter des Mischergehäuses. Der Abstand zwischen der Einlass- und Auslassöffnung 15 und 16 und die Förderung des Gemenges im Mischer 5 sind so ausgewählt, dass eine maximale Homogenität, die benötigte Feuchtigkeit und die Temperatur des Gemenge- Glasscherben-Gemisches erzielt werden.

Die Schaufelschneiden 10 sind entlang der Rotorwelle 9 mit einer bestimmten Teilung in der Achse der Schaufelschneide 10 und unter dem bestimmten Winkel zwischen den benachbarten Schaufelschneiden 10 so angebracht, dass sich die Schaufelschneiden 10 beim Drehen teilweise überlappen. Der zweite Speicherbereich 13 des Mischers 5 ist ohne Schaufelschneiden 10 ausgeführt und hat 7/25 der Gesamtlänge des Mischergehäuses. Der erste Beschickungs- 12 und der dritte Entleerungsbereich 14 sind der Länge nach gleich groß. In diesen Bereichen 12 und 14 sind die Schaufelschneiden 10 in gleichen Abständen zueinander angeordnet, und je ein Schaber 11 ist an den Stirnwänden angebracht. Alle Schaufelschneiden 10 sind unter dem Winkel von 90° gleichmäßig umlaufend verteilt. Allein die zweite Schaufelschneide 10 ist für ein intensives Mischen unter einem Winkel von 60° bezüglich der ersten Schaufelschneide 19 angeordnet.

Die gesamte Schneidfläche (Summenbreite) der Schaufelschneiden 10 überschreitet die Länge des Bereiches, in dem sie angebracht sind, um 15 - 30 %. Die Überlappung beträgt 3/5 des Teilungsschritts zwischen den Schaufelschneiden 10.

Die Anordnung der Schaber 11 und der Schaufelschneiden 10 in den Beschickungs-und Entleerungsbereichen 12 und 14 stellt ein Legen des Materials schichtenweise sicher. Dies verhilft zum Erhalt eines Gemenge-Glasscherben-Gemisches mit einer maximalen Homogenität.

Somit ermöglicht der neue Mischer 5, der direkt über den Beschickungsbunkern 8 des Glasschmelzofens angebracht ist, beinahe alle Nachteile der bekannten Mischer zu beseitigen.

Das zusätzliche Mischen, die Befeuchtung des Gemenges und die Erhöhung der Temperatur erfolgen direkt über dem Beschickungsort des Gemenges in den Glasschmelzofen.

Eine Nichthomogenität ist beseitigt und die Feuchtigkeitsverluste des Gemenges während der Förderung, Schüttung und Zwischenlagerung in den Bunkern 8 sind ausgeglichen.

Die Gemengefeuchtigkeit kann vor der Ofenbeschickung bis zu einem optimalen Wert von 5 - 7 % ohne Homogenitätssenkung und Verschlechterung der Fördermittelfunktion gebracht werden.

Die Wärmeverluste während der Förderung des Gemenges können ausgeglichen werden. Die Gemengetemperatur kann vor der Beschickung des Glasschmelzofens auf 35 - 60° C erhöht werden.

Das erwärmte Gemenge wird dem Verbrauchsbunker 8 über den Beschicker, der eine Temperatur von 80° C durch die Wärmeabgabe des Glasschmelzofens hat, zugeführt. Dies ermöglicht, die Prozesse einer Silikatbildung im Gemenge zu beschleunigen.

Der Mischer 5 ermöglicht, das Stauben und den Austrag der Gemengekomponenten in die Regeneratoren zu beseitigen. Dies senkt die Korrosionsgeschwindigkeit der Feuerstoffe im oberen Ofenbau sowie in den Aufsätzen der Regeneratoren und verlängert die Betriebszeit des Glasschmelzofens zwischen den Reparaturen.

Die genannten Vorteile erhöhen die Leistung des Glasschmelzofens und die Glasqualität, senken jedoch den Verbrauch der Brennstoff- und Energieressourcen.

## Patentansprüche

1. Intensivmischer für Glasgemenge, der eine zylindrische Mischkammer mit einem Einlassstutzen (15) zur Beschickung des Gemenges und der Glasscherben sowie Düsen (19 und 20) zur Wasser- und Dampfzufuhr aufweist, **dadurch gekennzeichnet,**
**dass** die Mischkammer in einen Beschickungsbereich (12), einen Speicherbereich (13) und einen Entleerungsbereich (14) unterteilt ist,
**dass** in der Mischkammer eine zentrale Rotorwelle (9) und eine Auslassöffnung (16) zur Entleerung des Gemenge-Glasscherben-Gemisches mit darunter angebrachten Magnetabscheidern (7) angeordnet ist,
**dass** zur Reinigung der Kammerwände in dem Beschickungsbereich (12), dem Speicherbereich (13) und dem Entleerungsbereich (14) Schaufelschneiden (10) vorgesehen sind, die mit ihren Schneiden unter einem Winkel von 90° zur Rotorwelle (9) gleichmäßig umlaufend auf der Rotorwelle (9) angebracht sind und
**dass** zur Reinigung der Kammerstirnwände den Kammerstimwänden zugekehrt Schaber (11) angeordnet sind, die diese Stirnwände reinigen.

2. Intensivmischer nach Anspruch 1,
**dadurch gekennzeichnet,**
**dass** in dem Beschickungsbereich (12), dem Speicherbereich (13) und dem Entleerungsbereich (14) zur Verbesserung der Vermischung den ersten Schaufelschneiden (10) zweite Schaufelschneiden (10) zugeordnet sind, die unter einem Winkel von 60° zur ersten Schaufelschneide (10) auf der Rotorwelle (9) angebracht sind.

3. Intensivmischer nach Anspruch 1 und 2,
**dadurch gekennzeichnet,**
**dass** die gesamte Schneidfläche (Summenbreite) der Schaufelschneiden (10) die Länge des Bereichs, in dem sie angebracht sind, um 15 - 30 % überschreitet.

4. Intensivmischer nach Anspruch 1 bis 3,
**dadurch gekennzeichnet,**
**dass** der Innendurchmesser und die Länge des Mischers (5) im Verhältnis von ca. 1 : 3 stehen.

5. Intensivmischer nach einem der Ansprüche 1 bis 4,
**dadurch gekennzeichnet,**
**dass** die Mischkammer über der Auslassöffnung (16) des Entleerungsbereichs (14) mit einer Öffnung (17) für ein Aspirationssystem versehen ist.
